# EUROPEAN PATENT APPLICATION

(11) **EP 1 518 606 A2**
(43) Date of publication of application: **30.03.2005**
(21) Application number: 04104550.1
(22) Date of filing: 21.09.2004
(51) Int. Cl.: B03D 1/16, B01D 21/24

(54) **Flotation device for separating minerals from sand**

(30) Priority: 23.09.2003 FI 20030345 U
(71) Applicant: Tommila, Pertti, 28660 Pori (FI)
(72) Inventor: Tommila, Pertti, 28660 Pori (FI)
(74) Representative: Kaukonen, Juha Veikko

(57) **Abstract**

A flotation device for separating minerals from sand, which flotation device has a flotation basin containing flotation fluid for the sand to be treated. The flotation basin (1) is elongated in shape and narrows downwards, and at the bottom thereof, there is a conveyor screw (3) for conveying sand and the minerals contained therein in the longitudinal direction of the flotation basin, and a discharge channel (6) for removing the treated sand from the flotation basin in a continuous process.

## Description

### BACKGROUND OF THE INVENTION

The invention relates to a flotation device for separating minerals from sand, which flotation device has a flotation basin for flotation fluid and sand containing minerals, and means for supplying air to the flotation fluid to form foam.

Different sand types are needed for different purposes. Sand contains minerals, such as typically feldspar and mica and different humus substances, which decrease the usability of sand. In some applications, the sand must be clean and should not contain a lot of minerals or fine, dust-like material. For this, the sand and the minerals in it are treated in different flotation devices, in which the sand and minerals are fed into a fluid containing mainly water and foam-forming chemicals. Air is also fed into it to form foam that binds the minerals, such as feldspar and mica, and impurities.

Known flotation devices for minerals operate on the dosage principle, whereby a specific dose of the mineral to be treated is always fed into them and then removed from the device after the treatment. Similarly, the used flotation fluid is removed. This makes the process difficult, slow and also expensive.

### BRIEF DESCRIPTION OF THE INVENTION

It is an object of the present invention to provide a flotation device capable of removing minerals from sand in a continuous process and operating efficiently. The flotation device of the invention is characterized in that the flotation basin is elongated in shape and narrows downwards, that in the bottom part of the flotation basin, there is a conveyor screw for conveying the sand and the minerals contained therein fed into a first end of the flotation basin longitudinally from the first end to a second end, and at the second end of the flotation basin, there is an discharge channel for removing the treated sand from the flotation basin in a continuous process.

The essential idea of the invention is that the flotation device has an elongated flotation basin that narrows downwards, and in the bottom part of the basin, there is a longitudinal conveyor screw for conveying the sand and the minerals contained therein from one end of the basin to another. Further, the flotation device of the invention is characterized in that at its second end, there is a discharge channel for removing the sand from the flotation device as slurry, and in the discharge channel, there are control elements for controlling the removal of the sand. The essential idea of one preferred embodiment of the invention is that the flotation basin is divided by partitions into two or more consecutive sections, i.e. flotation cells, whereby there is at least one foam-forming device for each flotation cell.

An advantage of the invention is that the treated sand and the minerals therein can be fed into the flotation device at one end of its basin, and the sand is cleaned by means of foam formed by air and minerals and fed into the bottom part of the basin, and the cleaned sand exits at the other end of the basin so that the cleaning process is continuous.

### BRIEF DESCRIPTION OF THE FIGURES

The invention will now be described in greater detail by means of the attached drawings, in which
Figure 1 is a partly sectional schematic side view of a flotation device for minerals according to the invention,
Figure 2 is a schematic view of the flotation device for minerals according to the invention cut along line A-A of Figure 1.

### DETAILED DESCRIPTION OF THE INVENTION

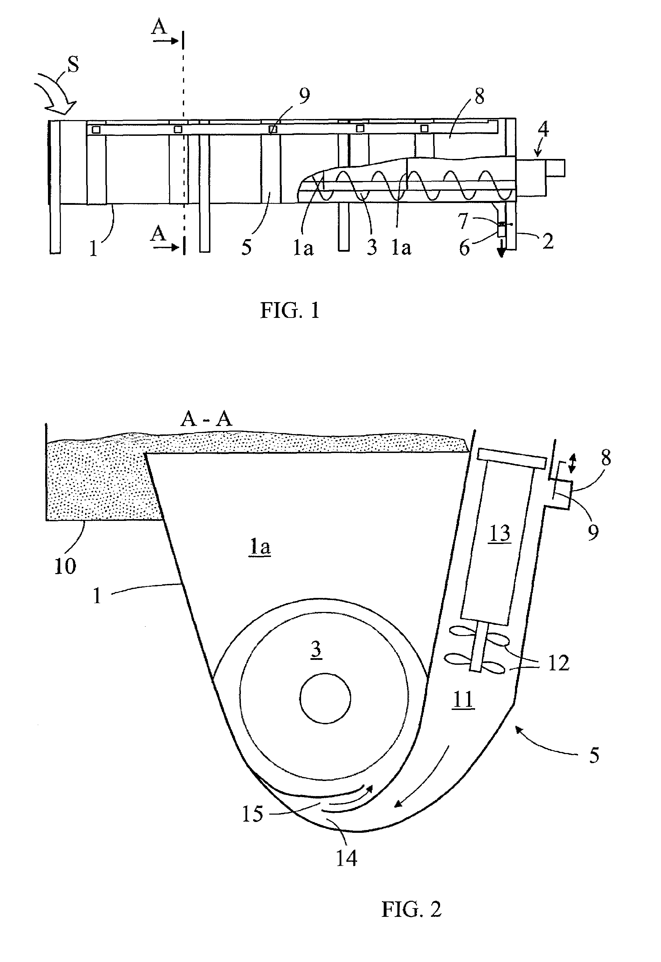

Figure 1 is a partly sectional schematic side view of a flotation device according to the invention. It has a flotation basin 1 which, as shown in Figure 2, is downward convergent and roundish at the bottom. The flotation basin 1 stands on a suitable platform on feet 2 or a separate body, for instance. At the bottom of the flotation basin 1, there is a conveyor screw 2 rotated by a rotation apparatus 4. At the side of the flotation basin 1, there are several foam-forming devices 5 that are described in greater detail in connection with Figure 2. The sand to be treated and the minerals and other impurities therein are fed into the flotation basin from its first end; in Figure 1, this is the left end indicated by arrow S. Foam formed by air and flotation fluid is fed by means of the flotation device from the bottom of the flotation basin 1, and the foam makes the material at the bottom of the flotation basin to move and, at the same time as it rises to the top of the flotation basin, it takes along various unwanted impurities and minerals, such as feldspar, mica, humus, and very fine-grained materials. The fluid in the flotation basin, which generally is mainly water, contains flotation chemicals that are added as necessary along with the minerals. Flotation chemicals are generally known per se and used in the flotation of minerals.

At the other end of the flotation basin 1, there is a discharge channel 6 at the bottom of the flotation basin 1. Through the discharge channel 6, the quartz sand conveyed by the conveyor screw 3 can exit the flotation basin in a slurry-like form, i.e. as a mixture of fluid and sand. The removal of the sand is done in such a manner that as small amount of the flotation fluid as possible exits with it. Therefore, it is advantageous to be able to control the discharge rate of the material. As a control element, the discharge channel 6 may have a control valve 7 that is able to control the size of the discharge channel 6 opening and thus also the discharge rate of the slurry formed by the sand and fluid. The control valve 7 may be a simple flange valve or some other simple control element for controlling the size of the discharge channel 6 opening in one way or another as necessary.

The flotation basin 1 is preferably divided into several consecutive sections, i.e. flotation cells, which limits the fluid flow in the longitudinal direction of the flotation basin and thus enhances the upward rise of the foam and the efficiency of the treatment of the minerals. This is implemented in such a manner that the flotation basin 1 has consecutive partitions 1 a that extend from the top edge of the flotation basin 1 or nearly from the top edge to the bottom part of the flotation basin so that essentially only an opening large enough for the conveyor screw 3 remains at the bottom of the partition. This way, the end wall of the flotation basin and the partitions 1 a respectively form several consecutive basin sections, i.e. flotation cells. There is preferably one foam-forming device 5 for each flotation cell which is normally enough to obtain the desired flotation efficiency. Naturally, if necessary, it is possible to install several foam-forming devices per one flotation cell, if it is deemed necessary due to the properties of the minerals to be treated, for instance.

At the end of the flotation basin, i.e. in the flotation cell connected to the discharge channel 6, the foam-forming device 5 is located close to the previous partition 1 a. As a result of this, the most significant upwards flow is at the forward end of the cell and settling takes place at the tail end of the cell as the sand slowly sinks downward to the bottom of the flotation basin and on to the discharge channel 6. At the same time, the flotation fluid is naturally relatively well cleared of the materials being treated and can thus be returned by suitable means to the forward end of the flotation basin 1 or else- where in the flotation basin 1 to one or more earlier points in the direction of flow of the flotation fluid, i.e. to the foam-forming devices 5, for instance, and then on for reuse. This, in turn, is done by directing the flotation fluid from the tail end of the flotation basin 1 along a return pipe or chute 8 back to each foam-forming device 5. The return of the fluid to each foam-forming device 5 can be controlled by a separate control, such as a valve 9, in each foam-forming device.

Figure 2 shows the flotation device for minerals cut along line A-A. As shown in Figure 2, the flotation basin 1 is downward convergent in cross-section and has a roundish bottom so as to suitably match the shape of the conveyor screw 3. Further, the flotation device has on one side of the flotation basin 1 a foam discharge chute 10, to which the foam accumulated on the surface of the fluid and the materials bound into the foam run over the side of the flotation basin 1. The foam-forming device 5 is a device in a separate box-like channel 11 and has one or more flotation propellers 12 rotated by a motor 13. The fluid in the flotation basin 1 exits for instance from the tail end of the flotation basin 1 to a return pipe or chute 8 connected thereto through an opening or over one side and flows along it to each box-like channel 11 in the manner shown schematically by the arrow and controlled by a control 9 shown as a control plate movable in elevation. The flotation propellers 12 mix the fluid and air into foam that moves through a gap 14 at the bottom end of the channel 11 on through a second narrow gap 15 to the flotation basin 1 below the conveyor screw 3, whereby the foam takes along the impurities and fine material as it flows through the sand and minerals.

As shown in Figure 2, the foam-forming devices 5 are separate from the flotation basin 1 and thus the flotation propellers 12 of the foam-forming device mainly come into contact with just the fluid and flotation chemicals and air, and are not required to stir the materials being treated, as is typically the case in the prior art solutions. Therefore, the wear of the flotation propellers is in practice quite small and consequently, they require very little servicing.

The invention is in the above description and in the figures only described by way of example and it is in now way limited thereto. Thus the flotation of the fluid, i.e. water and chemicals, can be done by several different devices known per se, and air can also be fed from other directions, if the movement of the minerals and impurities is to be improved in the flotation basin.

## Claims

1. A flotation device for separating minerals from sand, which flotation device has a flotation basin for flotation fluid and sand containing minerals, and means for supplying air to the flotation fluid to form foam, **characterized in that** the flotation basin (1) is elongated in shape and narrows downwards, that in the bottom part of the flotation basin (1), there is a conveyor screw (3) for conveying the sand and the minerals contained therein fed into a first end of the flotation basin (1) longitudinally from the first end to a second end, and at the second end of the flotation basin (1), there is an discharge channel (6) for removing the treated sand from the flotation basin (1) in a continuous process.

2. A flotation device for minerals as claimed in claim 1, **characterized in that** the discharge channel (6) has control elements (7), such as a control valve, for controlling the removal of the minerals.

3. A flotation device for minerals as claimed in claim 1 or 2, **characterized in that** it contains at least one foam-forming device (5) located outside the flotation basin (1) for mixing the flotation fluid and air into foam and for feeding it to the flotation basin (1) below the conveyor screw (3).

4. A flotation device for minerals as claimed in any one of the preceding claims, **characterized in that** it contains means, such as a foam discharge chute (10) at the side of the flotation basin (1), for removing the foam and the material bound thereto from the flotation basin (1).

5. A flotation device for minerals as claimed in any one of the preceding claims, **characterized in that** the flotation basin (1) has at least one partition (1 a), having at the bottom section thereof an opening for the conveyor screw (3), for dividing the flotation basin (1) into consecutive flotation cells, and that it has at least one foam-forming device (5) for each flotation cell.

6. A flotation device for minerals as claimed in any one of the preceding claims, **characterized in that** it contains means, such as a return pipe or chute (8), for returning the flotation fluid from the tail end of the flotation basin (1) to one or more earlier points in the direction of flow of the flotation fluid in the flotation basin (1).
